# FASCICULE DE BREVET EUROPEEN

(11) **EP 0 982 749 B1**
(45) Date de publication et mention de la délivrance du brevet: **17.08.2005**
(21) Numéro de dépôt: 98115337.2
(22) Date de dépôt: 14.08.1998
(51) Int. Cl.: H01H 37/76

(54) **Coupe-circuit et batterie le comportant**
Schmelzsicherung und diese enthaltende Batterie
Fuse and battery containing the same

(43) Date de publication de la demande: 01.03.2000
(73) Titulaire: Renata AG, 4452 Itingen (CH)
(72) Inventeur: Wyser, Paul Julian, 9050 Appenzell (CH); Schnidrig, Jürg, 4457 Diegten (CH)
(74) Mandataire: Thérond, Gérard Raymond

(56) Documents cités:
- WO-A-94/03913
- WO-A-96/30955
- DE-A- 2 819 583
- DE-A- 2 947 016
- DE-A- 19 605 187
- DE-A- 19 639 427
- FR-A- 2 655 479

## Description

La présente invention concerne un coupe-circuit disposé sur au moins un moyen de connexion d'un dispositif fournisseur ou consommateur d'énergie électrique contenu dans un container dont la température interne en fonctionnement ne doit pas dépasser une valeur critique déterminée pour des raisons de sécurité.

L'invention concerne en particulier des sources d'énergie telles que des piles et accumulateurs, désignés par la suite par le terme générique de "batterie" que la source d'énergie soit rechargeable ou non, lesdites batteries étant pourvues d'un tel coupe-circuit sensible à une élévation anormale de la température.

L'invention concerne plus particulièrement de telles batteries de type lithium-ion, de forme généralement prismatique et présentant une grande densité d'énergie, caractéristique recherchée pour les appareils portables en pleine expansion tels que les téléphones mobiles, les caméras vidéo et autres appareils électroniques. De telles batteries ont toutefois un fonctionnement délicat pouvant présenter des risques pour l'utilisateur ou pour les circuits électroniques contigus. En effet, lorsque la batterie est en circuit fermé avec une forte demande de courant, lors de la phase de charge pour les accumulateurs, ou lors d'un dysfonctionnement dû par exemple à un mauvais usage ou à un stockage à une température trop élevée, les réactions chimiques qui se produisent peuvent provoquer une décomposition partielle de l'électrolyte avec production d'un dégagement gazeux entraînant une augmentation de la pression à l'intérieur du container de la batterie et une élévation de température pouvant provoquer une explosion, une inflammation, ainsi que des dommages aux circuits électroniques contigus.

Pour remédier à cet inconvénient, il est donc nécessaire d'équiper de telles batteries de dispositifs de sécurité provoquant une réduction de la pression interne au moyen d'un évent, une diminution de la température et/ou une mise hors circuit de la batterie au moyen d'un coupe-circuit. Pour les batteries utilisées dans les appareils portables, il n'est guère envisageable d'incorporer à titre de dispositif de sécurité un échangeur de chaleur permettant de contrôler une élévation de température.

A titre d'exemple de dispositif de sécurité à évent, on peut citer le dispositif décrit dans le document EP 0 554 535 dans lequel une augmentation de la pression interne provoque l'ouverture d'une valve normalement maintenue fermée par la pression d'une rondelle élastique.

Dans la demande de brevet européen No 98105760 au nom de la demanderesse et incorporée à la présente demande par référence, un agencement particulier d'une composition thermofusible autour d'une borne de la batterie permet d'ouvrir un évent lorsque la température atteint une valeur anormalement élevée.

A titre d'exemple de coupe-circuit, on peut citer le document US 4,943,497 et FR-A-2 655 479, qui constitue en quelque sorte un perfectionnement au dispositif du document EP 0 554 535, en ce que l'augmentation de la pression interne de la batterie provoque également la rupture des moyens de connexion entre une borne et le matériau actif à l'intérieur de la batterie. Des dispositifs de ce type présentent l'inconvénient de faire appel à des agencements mécaniques plus ou moins complexes, ce qui contribue à augmenter le prix du produit final.

On a également proposé à titre de coupe-circuit des petits dispositifs adaptables à l'extérieur d'une batterie dont la résistance présente une très forte variation à une température déterminée, par exemple entre 100°C et 110°C, tels que les dispositifs proposés sous la dénomination "Polyswitch" par la société Raychem. Il est bien évident que de tels dispositifs sont sensibles à une température de proximité mais ne peuvent pas réagir à la température interne de la batterie. Même si ces dispositifs permettent d'utiliser à nouveau la batterie après chaque incident, les phénomènes d'hystérèse de la résistance ont un effet très défavorable sur la fiabilité et la durée de vie de ladite batterie. Ces "polyswitch" présentent en outre l'inconvénient d'avoir une résistance voisine de la résistance interne de la batterie.

Le but de la présente invention est de pallier les inconvénients susmentionnés en procurant un coupe-circuit, sensible à une élévation anormale de température intégré à un dispositif fournisseur ou consommateur d'énergie, et plus particulièrement un coupe-circuit pour une batterie, de conception nouvelle mais suffisamment simple pour ne pas augmenter sensiblement le coût du produit final.

A cet effet, l'invention a pour objet un coupe-circuit disposé sur au moins un moyen de connexion entre des bornes extérieures et un dispositif fournisseur ou consommateur d'énergie électrique, contenu dans un container et dont la température interne de fonctionnement ne doit pas dépasser une valeur critique θ₁. Ce coupe-circuit est disposé sur une paroi et en communication thermique avec ledit container. Il comprend un réceptacle destiné à recevoir une composition thermofusible ayant pour point de ramollissement θ₁, et une lame métallique flexible interposée entre deux plots interrompant électriquement ledit moyen de connexion. La lame flexible s'étend au-dessus dudit réceptacle en étant fixée à l'une de ses extrémités à la paroi du container et en étant pourvue dans sa partie libre d'un moyen d'ancrage dans ladite composition thermofusible. Cette lame flexible peut occuper une première position dite fermée, dans laquelle le moyen d'ancrage est retenu dans la composition thermofusible en infléchissant sa partie libre vers la paroi dudit container pour établir un contact électrique entre les plots et une deuxième position dite ouverte en étant libérée de la composition thermofusible par sa force de rappel élastique en ouvrant le contact entre les plots lorsque la température du container devient supérieure à la température de ramollissement θ₁ de la composition thermofusible.

Ce moyen d'ancrage est formé par tout moyen permettant de rendre solidaire une partie libre de la lame et le réceptacle contenant la composition thermofusible en comprimant ladite lame vers la paroi du container.

Selon un premier mode de réalisation, ce moyen d'ancrage est une patte soudée à la lame ou formée à partir de celle-ci.

Selon une première variante, la patte d'ancrage est formée simplement en recourbant l'extrémité libre de la lame. Selon une deuxième variante, la patte d'ancrage est formé dans une partie médiane de la lame par soudage, ou vient de matière avec celle-ci par une découpe en forme de "U" ouvert vers l'une de ses extrémités. Dans cette variante, la partie libre située au-delà de la patte permet d'établir un contact électrique avec un plot.

Dans ce premier mode de réalisation, la solidité de la prise de la patte dans la composition thermofusible peut être accrue en prévoyant des moyens d'accrochage additionnels tels qu'une découpe traversante, un pliage d'une partie découpée en "U", des aspérités créées ou rapportées sur sa surface, ou simplement par déformation de sa partie distale en dehors de son plan.

Selon un deuxième mode de réalisation, ce moyen d'ancrage est créé au moment de l'utilisation, par encliquetage d'une cheville, immobilisée dans la composition thermofusible, dans une découpe formée dans une partie libre de la lame, ladite découpe étant par exemple en forme de croix.

De façon à prendre en compte la température critique effective du dispositif, le réceptacle est avantageusement prolongé par une sonde thermique allant au coeur du container.

Un tel coupe-circuit est particulièrement bien adapté à une batterie, notamment à une batterie de type lithium-ion qui présente les plus grands risques de dysfonctionnement. Il peut être simplement rapporté entre une borne et un câble conducteur relié à un collecteur de courant. Selon un mode de réalisation préféré, le coupe-circuit comprend une sonde thermique formée par une barre ou un tube métallique aplati constituant l'anode ou la cathode de la batterie, le réceptacle de la composition thermofusible étant l'un des plots du moyen de connexion. Une telle batterie peut évidement être en plus pourvue d'un évent de sécurité du type de ceux connus dans l'art antérieur. Selon un mode de réalisation préféré, cet évent de sécurité est sensible, non pas à une augmentation de pression interne de la batterie, mais à une élévation de température en étant formé par un passage traversant le couvercle et obturé par une composition thermofusible identique ou différente de celle utilisée pour le coupe-circuit. Selon une autre caractéristique de l'invention, le réceptacle contenant la composition thermofusible du coupe-circuit est ouvert vers l'extérieur et forme également l'évent de sécurité lorsque la température de la batterie dépasse une température critique déterminée. Selon une variante conférant à la batterie deux niveaux de sécurité, l'obturation du réceptacle ouvert est effectuée avec deux compositions thermofusibles superposées : la première déclenche le coupe-circuit lorsque la température atteint la température critique et la deuxième ouvre l'évent lorsque cette température est dépassée d'un certain nombre de degrés. Il est possible de fixer ces deux seuils de sécurité par un choix approprié des compositions thermofusibles disponibles sur le marché, dont le point de ramollissement peut varier de 80°C à 150°C.

D'autres caractéristiques et avantages de la présente invention apparaîtront dans la description suivante en référence aux dessins annexés dans lesquels :
- les figures 1A et 1B sont des représentations schématiques arrachées en perspective d'un container dont une paroi est pourvue d'un coupe-circuit, selon un premier mode de réalisation, respectivement en position fermée et ouverte;
- la figure 2 représente une variante du coupe-circuit représentée aux figures 1A et 1B;
- la figure 3 est une représentation schématique arrachée en perspective d'un deuxième mode de réalisation d'un coupe-circuit selon l'invention;
- la figure 4 représente en perspective la lame élastique du coupe-circuit représentée à la figure 3;
- les figures 4A, 4B et 4C représentent des variantes de la patte de la lame élastique représentée à la figure 4;
- les figures 5A, 5B et 5C sont des représentations schématiques arrachées en perspective des états successifs d'un troisième mode de réalisation d'un coupe-circuit selon l'invention;
- la figure 6 représente en perspective un mode de réalisation de la lame élastique du coupe-circuit représenté aux figures 5A, 5B et 5C;
- la figure 7 est une vue de dessus, côté couvercle, d'une batterie prismatique pourvue d'un coupe-circuit selon l'invention;
- la figure 8 est une coupe selon la ligne VIII-VIII de la figure 7;
- la figure 9 est une coupe selon la ligne IX-IX, de la figure 7, et
- la figure 10 est une coupe agrandie au niveau du réceptacle d'une variante de réalisation du coupe-circuit représenté aux figures 5A, 5B et 5C.

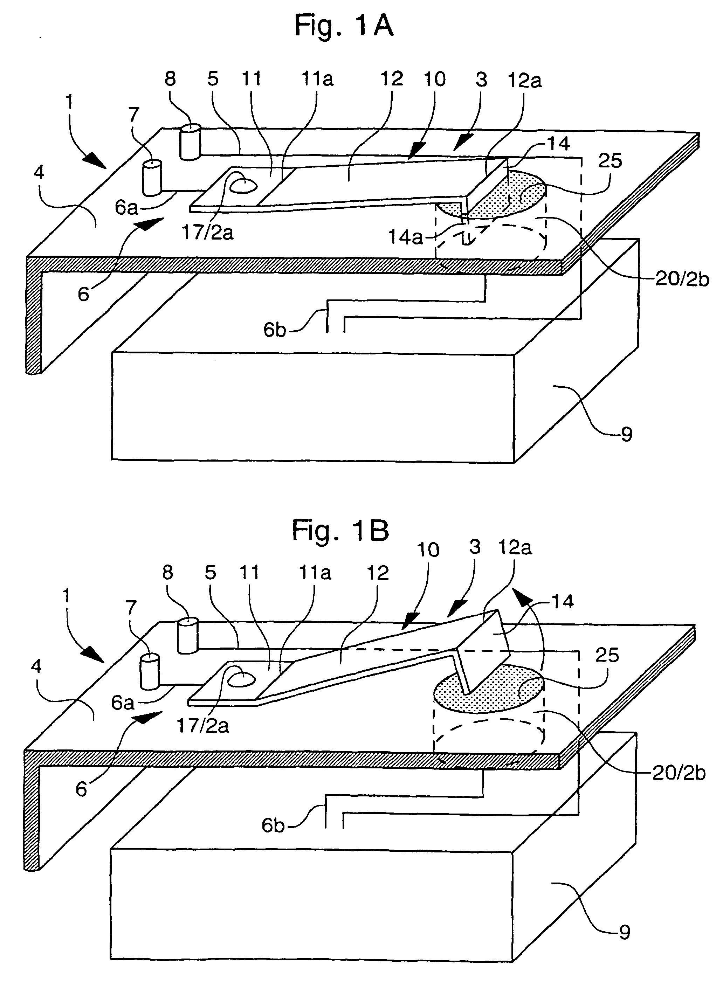

A la figure 1A, on a représenté schématiquement en perspective arrachée un container 1 dont une paroi 4 supporte des bornes 7, 8 électriquement reliées par des moyens de connexion 5, 6 à un dispositif, schématiquement représenté par le bloc 9, et susceptible de consommer ou de fournir de l'énergie électrique en dissipant de la chaleur, tel qu'un moteur ou une batterie, à laquelle il sera plus particulièrement fait référence dans la suite de la description. Ce dispositif est confiné dans le container 1, de sorte que la chaleur dissipée augmente la température interne du container 1 ainsi que celle de ses parois et des éléments en communication thermique avec celles-ci. Dans l'exemple représenté, le moyen de connexion 5, formé par exemple par un câble conducteur souple, relie directement la borne 8 au dispositif 9. Le moyen de connexion 6, reliant la borne 7, électriquement isolé de la paroi 4, au dispositif 9 comprend deux brins 6a, 6b interrompus par un coupe-circuit 3 qui comprend fondamentalement deux parties, électriquement isolées de la paroi 4 : une lame métallique flexible 10 et un réceptacle 20 ouvert vers l'extérieur et fermé vers l'intérieur dans l'exemple représenté. La lame 10 comprend une première partie 11 fixée sur la paroi 4 au moyen d'un rivet 17, électriquement isolé de la paroi 4 et formant le plot 2a de connexion à la borne 7, une pliure 11a qui éloigne de la paroi 4, par la force de rappel élastique du matériau formant la lame, une deuxième partie 12, et une deuxième pliure 12a qui oriente vers le centre du réceptacle 20 une patte 14. La lame flexible 10 est réalisée en un des matériaux connus de l'homme de l'art, tel qu'un alliage bronze-beryllium. Le réceptacle 20, qui forme aussi le plot de connexion 2b avec le dispositif 9, est ouvert uniquement vers l'extérieur et contient une composition thermofusible 25 dans laquelle est noyée la partie distale de la patte 14, ce qui permet de maintenir la lame flexible 10 comprimée vers la paroi 4. Dans l'exemple représenté, le réceptacle 20 est en communication thermique avec l'intérieur du container 1 uniquement par son enveloppe extérieure. La composition thermofusible est choisie parmi celles ayant un point de ramollissement compris entre 90°C et 150°C, par exemple un mélange eutectique Indium-Cadmium ayant pour point de ramollissement 123°C.

La figure 1B représente le coupe-circuit qui vient d'être décrit lorsque la température du container devient supérieure à la température de ramollissement de la composition thermofusible 25. La force de rappel élastique de la lame 10 retire la patte 14 de la composition thermofusible 25 et coupe ainsi le circuit 6 entre la borne 7 et le circuit 9.

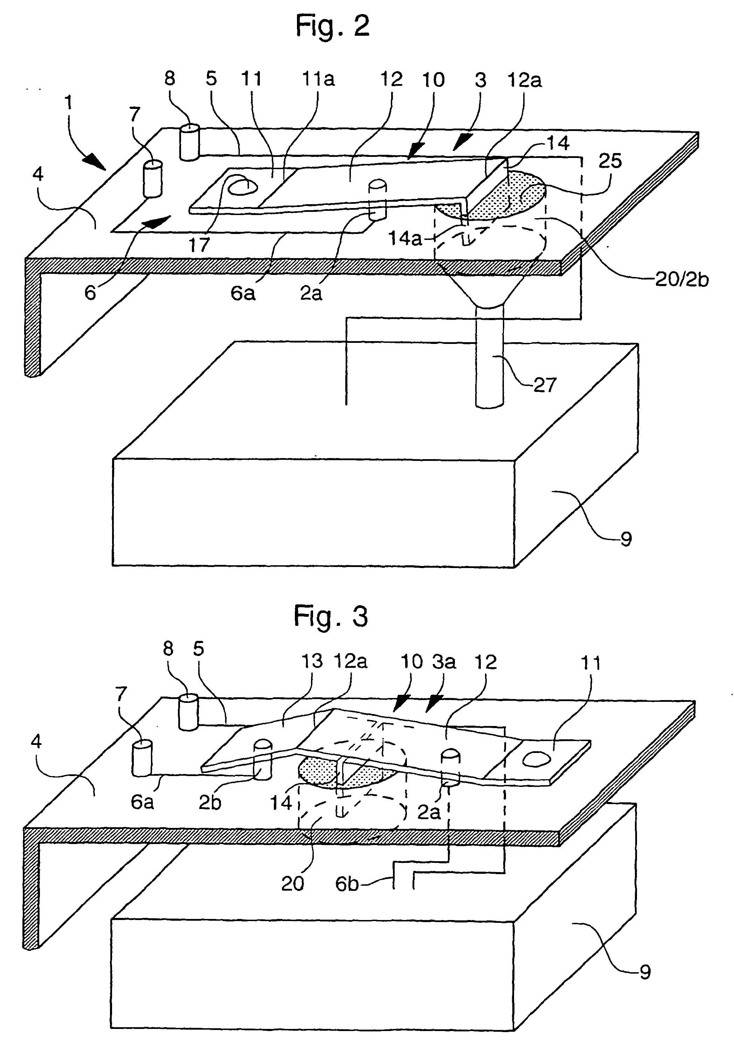

Dans la variante représentée à la figure 2, on observera que le rivet de fixation 17 de la lame flexible 10 et le plot de connexion 2a à la borne 7 sont séparés. Le plot 2a, également isolé électriquement de la paroi 4, est disposé entre le rivet de fixation 17 et le réceptacle 20 électriquement isolé de la paroi 4, comme indiqué précédemment. Dans cet exemple, le réceptacle 20 est en outre prolongé par une sonde thermique 27 dirigée vers le centre du container 1, voire au coeur du dispositif 9, de sorte que la déclenchement du coupe-circuit 3 se produit en fonction de l'élévation de température interne du container. On observera que l'isolation électrique du réceptacle 20 peut être réalisée avec un matériau qui permette aussi une isolation thermique, de sorte que la température prise en compte pour le déclenchement soit effectivement celle qui règne au coeur du dispositif.

Dans le mode d'exécution qui vient d'être décrit, il est bien évidemment possible de mettre exactement le même type de coupe-circuit sur le moyen de connexion 5.

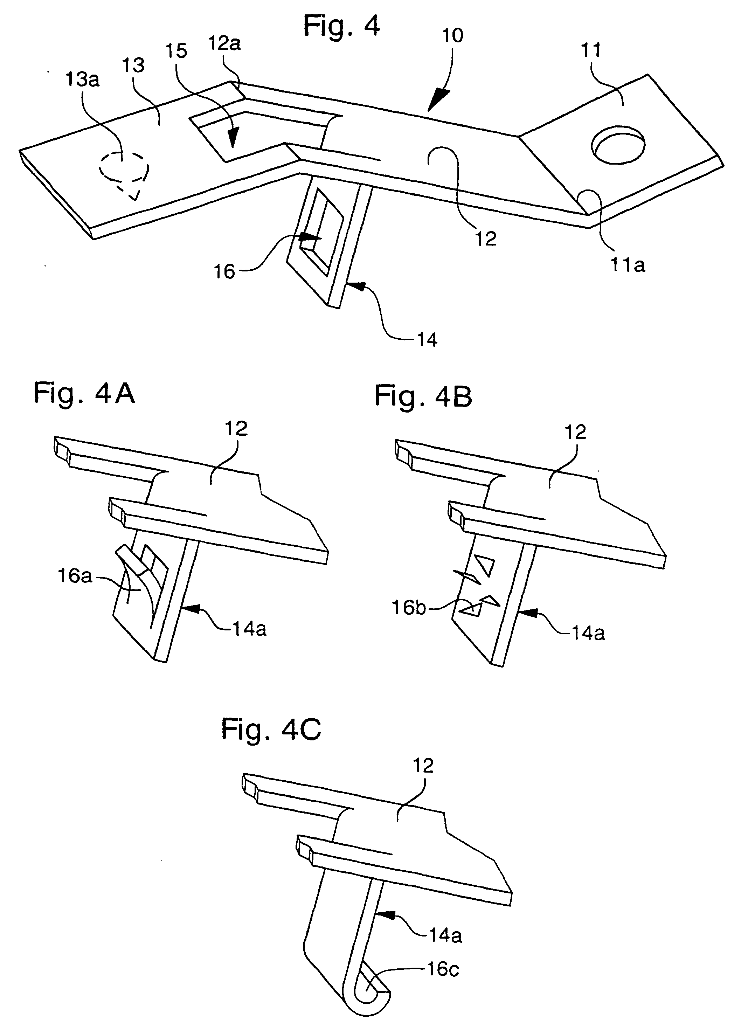

En se référant maintenant aux figures 3 et 4, on a représenté un coupe-circuit 3a dans lequel la partie libre 12 de la lame 10 est prolongée au-delà de la patte 14 par une partie 13 formant avec la partie 12 une légère pliure 12a orientant ladite partie 13 dans le sens de la paroi 4. En d'autres termes, la patte 14 se trouve dans la partie médiane de la lame flexible 10. Dans le mode de réalisation représenté, les plots de contact 2a, 2b sont situés de part et d'autre du réceptacle 20, en étant respectivement en contact avec les parties 12 et 13 de la lame, l'ensemble formé par le réceptacle 20, la composition thermofusible 25 et la patte n'ayant qu'une fonction mécanique. Pour augmenter la qualité du contact avec le plot 2a, la partie 12 de la lame 10 peut être pourvue d'un point de contact 13a en relief sur la face tournée vers le couvercle 4, comme on le voit sur la figure 4. La forme particulière de lame flexible qui vient d'être décrite peut être réalisée par tout moyen connu de l'homme de métier, mais selon un mode de réalisation préféré, représenté à la figure 4, elle est obtenue à partir d'une lame rectangulaire de longueur appropriée dans laquelle on effectue une découpe 15 en "U" ayant par exemple ses trois côtés parallèles aux bords et à une extrémité libre de la lame, cette découpe étant effectuée aux dimensions souhaitées de la patte, cette partie en découpe étant ensuite recourbée. Comme on le voit sur la figure 4, il est également avantageux de prévoir un moyen additionnel qui augmente la force d'ancrage de la patte dans la composition thermofusible, tel que le trou traversant 16. Il est bien sûr possible de concevoir des moyens additionnels d'ancrage équivalents, tels qu'une languette 16a découpée dans la patte 14 (figure 4A), des aspérités 16b rapportées ou formées dans la lame (figure 4B), ou une déformation recourbée 16c de l'extrémité (figure 4C).

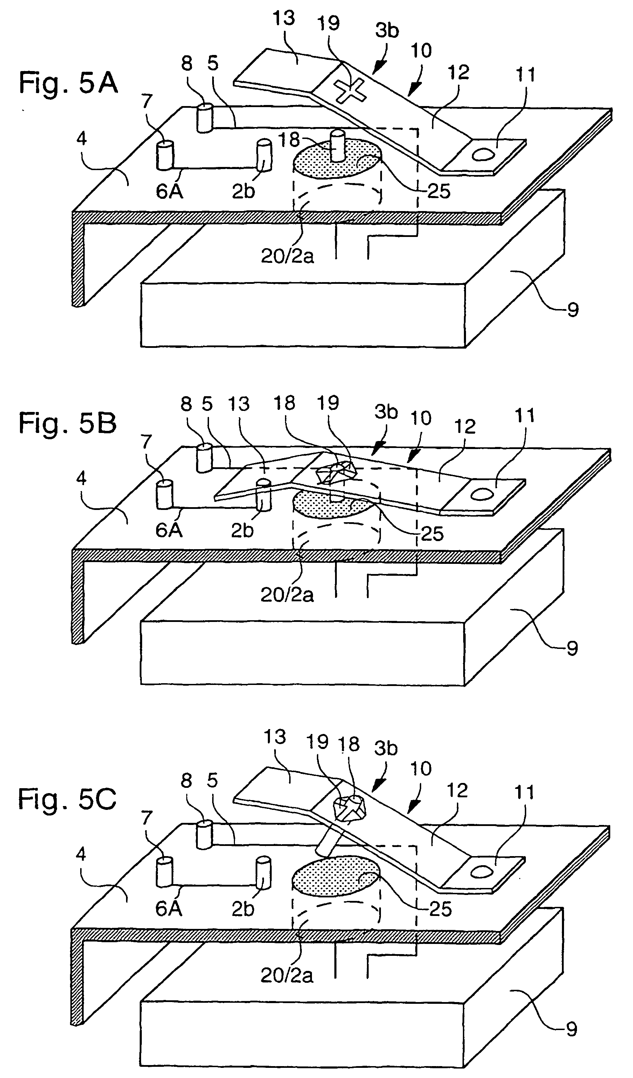

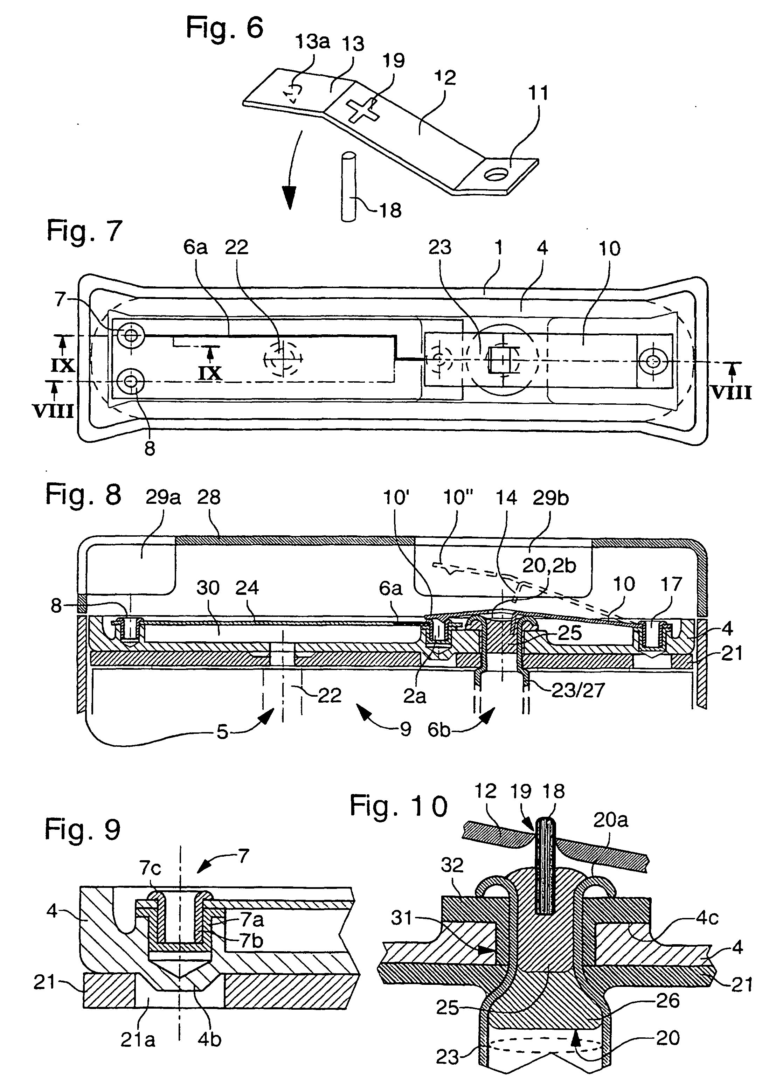

En se référant maintenant aux figures 5A, 5B, 5C et 6, on a représenté un troisième mode de réalisation d'un coupe-circuit 3b qui diffère de ceux qui viennent d'être décrits par son moyen d'ancrage. La figure 5A représente un container pré-équipé d'un coupe-circuit 3b dans l'état où il est livré à l'utilisateur, le moyen d'ancrage étant provisoirement séparé de la lame flexible 10. Ce moyen d'ancrage comprend d'une part une cheville 18 solidaire de la composition thermofusible 25 contenue dans le réceptacle 20, d'autre part une découpe 19 dans la lame 10, telle que la cheville 18 puisse être irréversiblement bloquée lorsqu'elle est forcée à travers ladite découpe 19 comme représenté à la figure 5B. Lorsque l'utilisateur veut mettre le dispositif en service, il doit donc effectuer cette opération d'armement, ce qui constitue une sécurité supplémentaire, lors de toutes les manipulations avant la mise en service. La figure 5C représente le coupe-circuit lorsque le système de sécurité s'est déclenché, la cheville 18 étant alors extraite de composition thermofusible 25 de la même façon que l'était la patte 14.

La figure 6 représente un exemple de découpe 19 en forme d'étoile, du type de celles utilisées dans certaines rondelles pour bloquer un axe. D'autres moyens équivalents peuvent être utilisés pour permettre l'encliquetage d'un élément allongé, mais non nécessairement cylindrique dans une plaque.

Quel que soit le mode de réalisation, on observera que le coupe-circuit selon l'invention est de construction simple et économique, en présentant en outre l'avantage de permettre un contrôle visuel d'un dysfonctionnement du dispositif 9 fournisseur ou consommateur d'énergie. De plus, la sécurité est accrue par le fait que l'utilisateur, ne peut pas réarmer lui-même le coupe-circuit : cette opération qui consiste à remplacer la composition thermofusible en ancrant à nouveau la patte 14 ou la cheville 18 peut par contre être effectuée par le fabricant ou un spécialiste qui aura préalablement contrôlé si le dysfonctionnement a endommagé ou non le dispositif 9.

Aux figures 7 à 9, on a représenté une batterie prismatique de type lithium-ion, dont le couvercle 4 de fermeture du container 1 est pourvu d'un coupe-circuit dont la lame flexible 10 correspond par exemple à celle représentée à la figure 4. Cette batterie comprend un enroulement de matériaux actifs imprégnés d'un électrolyte et formant respectivement l'anode et la cathode (non représentées), et correspondant au dispositif 9 fournisseur d'énergie. Le couvercle 4 est séparé des matériaux actifs par une plaque isolante 21, qui sert, comme cela est expliqué par la suite, également à positionner le couvercle 4. L'enroulement formant la cathode est électriquement relié à un collecteur formé, par exemple par une tige métallique aplatie 22, elle-même reliée au boîtier ou au couvercle pour constituer l'élément conducteur 5 jusqu'à la borne positive 8. L'enroulement formant l'anode est électriquement relié à un collecteur constitué par un tube 23 aplati à l'intérieur du container 1 et débouchant à l'extérieur de la batterie à travers le couvercle 4, ledit tube 23 correspondant au brin de connexion 6b avec le coupe-circuit. La partie supérieure de ce tube, qui est électriquement isolé du couvercle 4, constitue le réceptacle 20 du coupe-circuit. La lame 10 est fixée par son extrémité 11 au couvercle au moyen d'un rivet 17 électriquement isolé du couvercle 4. En fonctionnement normal, le thermofusible obture le réceptacle 20 et maintient la lame 10 dans une position 10' qui établit le contact, par l'extrémité 13 de ladite lame avec le plot 2a, lui-même relié électriquement par le moyen de connexion 6a à la borne négative 7. Le plot 2a et la borne 7 sont électriquement isolés du couvercle 4.

Lorsque la température interne de la batterie dépasse une valeur critique déterminée, le thermofusible 25 fond et la lame flexible 10 occupe la position 10" en coupant le circuit électrique. Cette construction offre également l'avantage de procurer une deuxième sécurité en ouvrant un évent mettant en communication l'intérieur de la batterie et le milieu extérieur permettant ainsi d'éviter tout risque d'explosion dû à l'augmentation de la pression interne.

La borne 7, le plot 2a et le rivet 17 qui sont isolés électriquement du couvercle 4 peuvent avoir la même configuration, comme représenté à la figure 9 pour la borne 7. Le couvercle 4 comprend un logement 4a cylindrique, fermé à sa partie inférieure par une cuvette 4b faisant saillie vers l'intérieur de la batterie et permettant le positionnement précis du couvercle 4 au-dessus d'un trou 21a formé dans la plaque isolante 21. La surface intérieure du logement 4a et une bande annulaire 4c de sa partie supérieure sont isolés par une garniture isolante 7a dans laquelle est monté en force un rivet 7b, dont le rebord 7c permet d'établir le contact avec la portion du conducteur 6a. Cette portion de conducteur 6a peut être un conducteur souple ordinaire ou un circuit imprimé sur une bande flexible ("flexprint") 24.

Dans le cas d'une batterie lithium-ion, il est en outre possible de disposer dans le couvercle, par exemple sous le flexprint 24 un circuit intégré 30 permettant par exemple d'identifier le type de batterie, d'en indiquer la durée de vie, ou d'en contrôler le débit de courant en constituant ainsi une sécurité primaire supplémentaire.

Cette batterie est enfin obturée par un capot 28 disposé sur le couvercle et dans lequel sont formées deux ouvertures 29a et 29b. L'ouverture 29a donne accès aux bornes 7, 8 et l'ouverture 29b permet l'armement et/ou le contrôle visuel de l'état du coupe-circuit.

En se référant maintenant à la figure 10, on a représenté en coupe agrandie une variante du coupe-circuit représenté aux figures 7 à 9, dans laquelle les moyens d'ancrage de la lame 10 dans la composition thermofusible 25 sont ceux qui ont été décrits en référence aux figures 5A à 6. Cette variante diffère en ce que le réceptacle 20, ouvert vers l'intérieur de cette batterie, est obturé par une première composition thermofusible 25 ayant un point de ramollissement θ₁, et par une deuxième composition thermofusible 26, disposée vers l'intérieur du container 1 et ayant une température de ramollissement θ₂ supérieure à θ₁. Cette variante permet d'ajouter une sécurité supplémentaire, la montée en température à l'intérieur de la batterie, et donc l'augmentation de la pression interne pouvant se poursuivre un certain temps après le déclenchement du coupe-circuit. Pour la première composition thermofusible 25, actionnant le coupe-circuit, on peut utiliser par exemple un mélange eutectique de Indium, Etain et Cadmium ayant pour point de ramollissement 93°C, et pour la deuxième composition thermofusible 26, un mélange eutectique d'Indium et de Cadmium ayant pour point de ramollissement 123°C. Sur la figure 10, on observera également que l'isolation électrique du tube 23, formant également le réceptacle 20 et le plot 2a, est obtenu par un joint isolant 31 tubulaire prenant appui à sa partie inférieure sur la plaque isolante 21 et présentant à sa partie supérieure une collerette 32 comprimée entre la bande annulaire supérieure 4c du couvercle 4 et un rebord riveté 20a du réceptacle 20.

Les exemples qui viennent d'être donnés, en particulier pour une batterie, montrent qu'il est possible d'augmenter la sécurité d'emploi en incorporant un coupe-circuit, avec tous les aménagements à la portée de l'homme de l'art pour un produit donné, sans sortir du cadre de l'invention, comme défini dans les revendications.

## Revendications

1. Coupe-circuit disposé sur au moins un moyen de connexion (5, 6) entre des bornes extérieures (7, 8) et un dispositif fournisseur ou consommateur d'énergie électrique (9), contenu dans un container (1) et dont la température interne de fonctionnement ne doit pas dépasser une valeur critique θ₁, **caractérisé en ce qu'**une paroi (4) dudit container (1) supporte un réceptacle (20), destiné à recevoir une composition thermofusible (25) ayant pour point de ramollissement θ₁ et ayant un moyen de transmission thermique avec le container, et une lame métallique flexible (10) interposée entre deux plots (2a, 2b) interrompant électriquement ledit moyen de connexion, ladite lame (10) s'étendant au-dessus dudit réceptacle (20) en étant fixée à l'une de ses extrémités (11) à la paroi du container et en étant pourvue dans sa partie libre (12, 13) d'un moyen d'ancrage (14, 18-19) dans ladite composition thermofusible (25), ladite lame flexible (10) pouvant occuper une première position (10') dite fermée, dans laquelle le moyen d'ancrage (14, 18-19) est retenu dans la composition thermofusible (25) en infléchissant sa partie libre (12, 13) vers la paroi (4) dudit container (1) pour établir un contact électrique entre les plots (2a, 2b), et une deuxième position (10'') dite ouverte, en étant libérée de la composition thermofusible (25) par sa force de rappel élastique en ouvrant le contact entre les plots (2a, 2b) lorsque la température du container (1) devient supérieure à la température de ramollissement θ₁ de la composition thermofusible (25).

2. Coupe-circuit selon la revendication 1, **caractérisé en ce que** le moyen d'ancrage est formé par une patte recourbée (14) solidaire de la lame (10) et dirigée sensiblement vers le centre du réceptacle (20).

3. Coupe-circuit selon la revendication 1, **caractérisé en ce que** le moyen d'ancrage est formé par une cheville (18) solidaire de la composition thermofusible (25) et par un moyen d'encliquetage (19) formé par une découpe dans une partie libre (12, 13) de la lame (10) pour verrouiller ladite cheville (18).

4. Coupe-circuit selon la revendication 2, **caractérisé en ce que** la patte recourbée (14) est située à la partie distale de la lame (10).

5. Coupe-circuit selon la revendication 4, **caractérisé en ce que** les plots (2a, 2b) du moyen de connexion sont respectivement confondus avec le réceptacle (20) de la composition thermofusible (25) et un rivet (17) de fixation de la lame (10) sur la paroi (4).

6. Coupe-circuit selon la revendication 4, **caractérisé en ce qu'**un plot (2a) du moyen de connexion est disposé entre le réceptacle (20) et un rivet de fixation (17) de la lame (10) et que l'autre plot (2b) est formé par le réceptacle (20) ou le rivet (17).

7. Coupe-circuit selon la revendication 2, **caractérisé en ce que** la patte recourbée (14) est située dans une partie médiane de la lame (10).

8. Coupe-circuit selon la revendication 7, **caractérisé en ce que** les plots (2a, 2b) du moyen de connexion sont situés de part et d'autre du réceptacle (20).

9. Coupe-circuit selon la revendication 7, **caractérisé en ce qu'**un plot (2a) du moyen de connexion est disposé en dessous de l'extrémité libre (13) de la lame (10) et que l'autre plot (2b) est formé par le réceptacle (20) ou le rivet (17).

10. Coupe-circuit selon la revendication 7, **caractérisé en ce que** la patte recourbée (14) est formée par découpe et pliage d'une partie médiane de la lame (10).

11. Coupe-circuit selon la revendication 2, **caractérisé en ce que** la patte recourbée (14) comprend en outre des moyens permettant d'augmenter sa prise dans la composition thermofusible (25), lesdits moyens étant choisis, pour la partie médiane, parmi une découpe traversante (16), une découpe et un pliage d'une petite portion (16a) de ladite partie médiane et par des aspérités (16b) rapportées ou formées sur l'une des faces de ladite partie recourbée, et pour la partie distale par une déformation (16c) en dehors au plan de la patte (14).

12. Coupe-circuit selon la revendication 3, **caractérisé en ce que** le moyen d'encliquetage est formé par une découpe (19) de la lame (10) en forme de croix.

13. Coupe-circuit selon la revendication 1, **caractérisé en ce que** le réceptacle (20) est prolongé par une sonde thermique (27) dirigée vers le coeur du container (1).

14. Coupe-circuit selon la revendication 1, **caractérisé en ce que** l'enveloppe extérieure du réceptacle (20) pénètre à l'intérieur du container (1).

15. Batterie comprenant un container métallique (1) renfermant des matériaux actifs imprégnés d'un électrolyte et formant respectivement l'anode et la cathode, ledit container (1) étant obturé à sa partie supérieure par un couvercle (4), séparé des matériaux actifs par une plaque isolante (21) et supportant deux bornes (7, 8) reliées par des moyens de connexion (5, 6) à l'anode et à la cathode, **caractérisée en ce qu'**au moins un des moyens de connexion est pourvu d'un coupe-circuit selon l'une quelconque des revendications 1 à 14, ledit coupe-circuit étant disposé sur le couvercle.

16. Batterie selon la revendication 15, **caractérisée en ce que** la sonde thermique est formée par une barre ou un tube métallique relié à l'anode ou à la cathode et **en ce que** le réceptacle (20) est l'un des plots (2a, 2b) d'un moyen de connexion (5, 6).

17. Batterie selon la revendication 16, **caractérisée en ce que** le couvercle (4) comporte en outre un évent de sécurité formé par un passage traversant, ledit passage étant obturé par une composition thermofusible identique ou différente de celle du réceptacle (20).

18. Batterie selon la revendication 17, **caractérisée en ce que** la composition thermofusible disposée dans l'évent a une température de ramollissement θ₂ supérieure à la température de ramollissement θ₁ de la composition thermofusible (25) disposée dans le réceptacle (20) du coupe-circuit.

19. Batterie selon la revendication 16, **caractérisée en ce que** le réceptacle (20) est également ouvert vers l'intérieur de la batterie pour former un évent de sécurité lorsque la température interne est supérieure à la température de ramollissement θ₁ de la composition thermofusible (25).

20. Batterie selon la revendication 19, **caractérisée en ce que** le réceptacle (20) comprend en outre dans sa partie ouverte vers l'intérieur une deuxième composition thermofusible (26) ayant une température de ramollissement θ₂ supérieure à θ₁.

## Patentansprüche

1. Abschalteinrichtung, die an wenigstens einem Verbindungsmittel (5, 6) zwischen äußeren Anschlüssen (7, 8) und einer Vorrichtung (9) angeordnet ist, die elektrische Energie liefert oder verbraucht und in einem Behälter (1) enthalten ist und deren interne Betriebstemperatur einen kritischen Wert θ₁ nicht überschreiten darf, **dadurch gekennzeichnet, daß** eine Wand (4) des Behälters (1) einen Aufnahmeraum (20) trägt, der dazu bestimmt ist, eine wärmeschmelzbare Verbindung (25) aufzunehmen, die als Erweichungspunkt θ₁ hat, und ein Mittel für die Wärmeübertragung mit dem Behälter besitzt, wobei ein biegsames metallisches Plättchen (10), das zwischen zwei Anschlußstellen (2a, 2b) eingefügt ist, das Verbindungsmittel elektrisch unterbricht, wobei sich das Plättchen (10) über dem Aufnahmebehälter (20) erstreckt und mit einem seiner Enden (11) an der Wand des Behälters befestigt ist und in seinem freien Teil (12, 13) mit einem Mittel (14, 18-19) zur Verankerung in der wärmeschmelzbaren Verbindung (25) versehen ist, wobei das biegsame Plättchen (10) eine erste Stellung (10'), die geschlossene Stellung genannt wird, einnehmen kann, in der das Verankerungsmittel (14, 18-19) in der wärmeschmelzbaren Verbindung (25) gehalten wird, indem sein freier Teil (12, 13) zu der Wand (4) des Behälters (1) durchgebogen ist, um einen elektrischen Kontakt zwischen den Anschlußstellen (2a, 2b) herzustellen, und eine zweite Stellung (10"), die geöffnete Stellung genannt wird, einnehmen kann, in der sie durch seine elastische Rückstellkraft aus der wärmeschmelzbaren Verbindung (25) befreit ist, wobei es den Kontakt zwischen den Anschlußstellen (2a, 2b) öffnet, wenn die Temperatur des Behälters (1) größer als die Erweichungstemperatur θ₁ der wärmeschmelzbaren Verbindung (25) wird.

2. Abschalteinrichtung nach Anspruch 1, **dadurch gekennzeichnet, daß** das Verankerungsmittel durch einen umgebogenen Ansatz (14) gebildet ist, der mit dem Plättchen (10) fest verbunden und im Wesentlichen zur Mitte des Aufnahmebehälters (20) gerichtet ist.

3. Abschalteinrichtung nach Anspruch 1, **dadurch gekennzeichnet, daß** das Verankerungsmittel durch einen Zapfen (18), der mit der wärmeschmelzbaren Verbindung (25) fest verbunden ist, und durch ein Einrastmittel (19), das durch einen Ausschnitt in dem freien Teil (12, 13) des Plättchens (10) gebildet ist, um den Zapfen (18) zu verriegeln, gebildet ist.

4. Abschalteinrichtung nach Anspruch 2, **dadurch gekennzeichnet, daß** sich der umgebogene Ansatz (14) an dem entfernten Teil des Plättchens (10) befindet.

5. Abschalteinrichtung nach Anspruch 4, **dadurch gekennzeichnet, daß** die Anschlußstellen (2a, 2b) des Verbindungsmittels mit dem Aufnahmebehälter (20) der wärmeschmelzbaren Verbindung (25) bzw. mit einem Niet (17) für die Befestigung des Plättchens (10) an der Wand (4) deckungsgleich sind.

6. Abschalteinrichtung nach Anspruch 4, **dadurch gekennzeichnet, daß** eine Anschlußstelle (2a) des Verbindungsmittels zwischen dem Aufnahmebehälter (20) und einem Niet (17) für die Befestigung des Plättchens (10) angeordnet ist und daß die andere Anschlußstelle (2b) durch den Aufnahmebehälter (20) oder den Niet (17) gebildet ist.

7. Abschalteinrichtung nach Anspruch 2, **dadurch gekennzeichnet, daß** sich der umgebogene Ansatz (14) in einem Mittelteil des Plättchens (10) befindet.

8. Abschalteinrichtung nach Anspruch 7, **dadurch gekennzeichnet, daß** sich die Anschlußstellen (2a, 2b) des Verbindungsmittels beiderseits des Aufnahmebehälters (20) befinden.

9. Abschalteinrichtung nach Anspruch 7, **dadurch gekennzeichnet, daß** eine Anschlußstelle (2a) des Verbindungsmittels unter dem freien Ende (13) des Plättchens (10) angeordnet ist und die andere Anschlußstelle (2b) durch den Aufnahmebehälter (20) oder den Niet (17) gebildet ist.

10. Abschalteinrichtung nach Anspruch 7, **dadurch gekennzeichnet, daß** der umgebogene Ansatz (14) durch Ausschneiden und Biegen eines Mittelteils des Plättchens (10) gebildet ist.

11. Abschalteinrichtung nach Anspruch 2, **dadurch gekennzeichnet, daß** der umgebogene Ansatz (14) außerdem Mittel umfasst, die ermöglichen, seinen Eingriff in der wärmeschmelzbaren Verbindung (25) zu erhöhen, wobei diese Mittel für den Mittelteil gewählt sind aus einem quer verlaufenden Ausschnitt (16), einem Ausschnitt und einem Umbiegen eines kleinen Abschnitts (16a) des Mittelteils sowie aus Rauheiten (16b), die einer der Flächen des umgebogenen Teils zugefügt sind oder die daran ausgebildet sind, und für den entfernten Teil gewählt sind aus einer Verformung (16c) außerhalb der Ebene des Ansatzes (14).

12. Abschalteinrichtung nach Anspruch 3, **dadurch gekennzeichnet, daß** die Schließmittel durch einen Ausschnitt (19) des Plättchens (10) in Kreuzform gebildet sind.

13. Abschalteinrichtung nach Anspruch 1, **dadurch gekennzeichnet, daß** der Aufnahmebehälter (20) durch eine Wärmesonde (27) verlängert ist, die zum Kern des Behälters (1) gerichtet ist.

14. Abschalteinrichtung nach Anspruch 1, **dadurch gekennzeichnet, daß** die äußere Hülle des Aufnahmebehälters (20) in den Innenraum des Behälters (1) eindringt.

15. Batterie, die einen Metallbehälter (1) aufweist, in den aktive Materialien, die mit einem Elektrolyt imprägniert sind und die Anode bzw. die Katode bilden, eingeschlossen sind, wobei der Behälter (1) in seinem oberen Teil durch einen Deckel (4) verschlossen ist, der von den aktiven Materialien durch eine isolierende Platte (21) getrennt ist und zwei Anschlüsse (7, 8) trägt, die über Verbindungsmittel (5, 6) mit der Anode bzw. der Katode verbunden sind, **dadurch gekennzeichnet, daß** wenigstens eines der Verbindungsmittel mit einer Abschalteinrichtung nach einem der Ansprüche 1 bis 14 versehen ist, wobei die Abschalteinrichtung auf dem Deckel angeordnet ist.

16. Batterie nach Anspruch 15, **dadurch gekennzeichnet, daß** die Wärmesonde durch einen Stab oder ein Metallrohr gebildet ist, der bzw. das mit der Anode oder mit der Katode verbunden ist, und daß der Aufnahmebehälter (20) eine der Anschlußstellen (2a, 2b) eines Verbindungsmittels (5, 6) ist.

17. Batterie nach Anspruch 16, **dadurch gekennzeichnet, daß** der Deckel (4) außerdem einen Sicherheitsabzug aufweist, der durch einen Durchgangskanal gebildet ist, wobei der Kanal durch eine wärmeschmelzbare Verbindung verschlossen ist, die mit jener des Aufnahmebehälters (20) übereinstimmt oder hiervon verschieden ist.

18. Batterie nach Anspruch 17, **dadurch gekennzeichnet, daß** die wärmeschmelzbare Verbindung, die in dem Abzug angeordnet ist, eine Erweichungstemperatur θ₂ hat, die höher ist als die Erweichungstemperatur θ₁ der wärmeschmelzbaren Verbindung (25), die in dem Aufnahmebehälter (20) der Abschalteinrichtung angeordnet ist.

19. Batterie nach Anspruch 16, **dadurch gekennzeichnet, daß** der Aufnahmebehälter (20) ebenfalls zum Innenraum der Batterie offen ist, um einen Sicherheitsabzug zu bilden, wenn die Innentemperatur höher ist als die Erweichungstemperatur θ₁ der wärmeschmelzbaren Verbindung.

20. Batterie nach Anspruch 19, **dadurch gekennzeichnet, daß** der Aufnahmebehälter (20) außerdem in seinem zum Innenraum offenen Teil eine zweite wärmeschmelzbare Verbindung (26) besitzt, die eine Erweichungstemperatur θ₂ hat, die höher als θ₁ ist.

## Claims

1. Breaker switch arranged on at least one connection means (5, 6) between the outer terminals (7, 8) and an electric power supply or consumer device (9), contained in a container (1) and whose internal operating temperature must not exceed a critical value θ₁, **characterised in that** a wall (4) of said container (1) carries a receptacle (20), intended to accommodate a thermofusible composition (25) having a softening point θ₁, and having heat transmission means with the container, and a flexible metal strip (10) interposed between two studs (2a, 2b) electrically breaking said connection means, said flexible strip (10) extending above said receptacle (20) while being fixed by one of its ends (11) to the wall of the container and being provided in its free portion (12, 13) with means (14, 18-19) for the anchoring thereof in said thermofusible composition (25), said flexible strip (10) being able to occupy a first position (10') called the closed position, in which the anchoring means (14, 18-19) are held in the thermofusible composition (25) while its free portion (12, 13) is bent towards the wall (4) of said container (1) to establish an electric contact between the studs (2a, 2b), and a second position (10") called the open position in which it is released from the thermofusible composition (25) by its elastic return force opening thereby the contact between the studs (2a, 2b), when the temperature of the container (1) becomes higher than the softening temperature θ₁ of the thermofusible composition (25).

2. Breaker switch according to claim 1, **characterised in that** the anchoring means are formed by a bent lug (14) fixed to the strip (10) and substantially directed towards the centre of the receptacle (20).

3. Breaker switch according to claim 1, **characterised in that** the anchoring means are formed by a pin (18) fixed to the thermofusible composition (25) and by click fitting means (19) formed by a part cut out of a free portion (12, 13) of the strip (10) to lock said pin (18).

4. Breaker switch according to claim 2, **characterised in that** the bent lug (14) is situated on the distal portion of the strip (10).

5. Breaker switch according to claim 4, **characterised in that** the studs (2a, 2b) of the connection means are respectively identical with the receptacle (20) for the thermofusible composition (25) and a rivet (17) for fixing the strip (10) onto the wall (4).

6. Breaker switch according to claim 4, **characterised in that** a stud (2a) of the connection means is arranged between the receptacle (20) and a fixing rivet (17) of the strip (10) and that the other stud (2b) is formed by the receptacle (20) or the rivet (17).

7. Breaker switch according to claim 2, **characterised in that** the bent lug (14) is situated in a median portion of the strip (10).

8. Breaker switch according to claim 7, **characterised in that** the studs (2a, 2b) of the connection means are situated on either side of the receptacle (20).

9. Breaker switch according to claim 7, **characterised in that** one stud (2a) of the connection means is arranged below the free end (13) of the strip (10) and that the other stud (2b) is formed by the receptacle (20) or the rivet (17).

10. Breaker switch according to claim 7, **characterised in that** the bent lug (14) is formed by cutting out and folding a median portion of the strip (10).

11. Breaker switch according to claim 2, **characterised in that** the bent lug (14) further includes means allowing the setting thereof in the thermofusible composition (25) to be increased, said means being selected, for the median portion, from among a through cut out part (16), cutting out and folding a small portion (16a) of said median portion and rough zones (16b) added to or formed on one of the faces of said bent portion, and for the distal portion by a deformation (16c) out of the plane of the lug (14).

12. Breaker switch according to claim 3, **characterised in that** the click fitting means are formed by a cut out portion (19) of the strip (10) in the shape of a cross.

13. Breaker switch according to claim 1, **characterised in that** the receptacle (20) is extended by a heat probe (27) directed towards the core of the container (1).

14. Breaker switch according to claim 1, **characterised in that** the outer envelope of the receptacle (20) penetrates inside the container (1).

15. Battery including a metal container (1) enclosing active materials impregnated by an electrolyte and respectively forming the anode and the cathode, said container (1) the upper portion thereof being sealed by a cover (4), separated from the active materials by an insulating plate (21) and carrying two terminals (7, 8) connected by connection means (5, 6) to the anode and the cathode, **characterised in that** at least one of the connection means is provided with a breaker switch according to any one of claims 1 to 14, said breaker switch being arranged on the cover.

16. Battery according to claim 15, **characterised in that** the heat probe is formed by a metal bar or tube connected to the anode or to the cathode and **in that** the receptacle (20) is one of the studs (2a, 2b) of the connection means (5, 6).

17. Battery according to claim 16, **characterised in that** the cover (4) further includes a safety vent formed by a through passage, said passage being sealed by a thermofusible composition which is identical to or different from that of the receptacle (20).

18. Battery according to claim 17, **characterised in that** the thermofusible composition arranged in the vent has a softening temperature θ₂, which is higher than the softening temperature θ₁ of the thermofusible composition (25) arranged in the receptacle (20) of the breaker switch.

19. Battery according to claim 16, **characterised in that** the receptacle (20) is also open towards the inside of the battery to form a safety vent when the internal temperature is higher than softening temperature θ₁ of the thermofusible composition (25).

20. Battery according to claim 19, **characterised in that** the receptacle (20) further includes in its portion which is open inwards a second thermofusible composition (26) having a softening temperature θ₂ higher than θ₁.
